# EUROPEAN PATENT APPLICATION

(11) **EP 2 372 506 A1**
(43) Date of publication of application: **05.10.2011**
(21) Application number: 11161066.3
(22) Date of filing: 04.04.2011
(51) Int. Cl.: G06F 3/041, G06F 3/045

(54) **Touch screen panel and display device having the same**

(30) Priority: 05.04.2010 KR 20100030924
(71) Applicant: Samsung Mobile Display Co., Ltd., Yongin-city, Gyunggi-do 446-711 (KR)
(72) Inventor: Kim, Il-Nam, Cheonan-si (KR); Park, Won-Sang, Cheonan-si (KR); Kim, Min-Woo, Cheonan-si (KR); Lim, Dong-Hun, Cheonan-si (KR); Kim, Jae-Kyoung, Cheonan-si (KR)
(74) Representative: Gulde Hengelhaupt Ziebig & Schneider

(57) **Abstract**

A touch screen panel includes an upper substrate, first contact electrodes on the upper substrate, the first contact electrodes being connected to first detecting lines, a lower substrate, second contact electrodes on the lower substrate, the second contact electrodes being connected to second detecting lines, and a transparent piezoresistive layer between the first contact electrodes and the second contact electrodes, the transparent piezoresistive layer being configured to change resistance at a touch input position to detect touch pressure and touch coordinates.

## Description

### BACKGROUND

### 1. Field

Example embodiments relate to a touch screen panel and a display device having the same. More particularly, example embodiments relate to a resistive type touch screen panel that has improved transmittance and touch pressure detection capabilities, and a display device having the touch screen panel.

### 2. Description of the Related Art

A touch screen panel is an input device that selects contents displayed on a screen, e.g., an image display device, etc., using a person's hand or an object to input commands of a user. The touch screen panel is provided on a front face of the image display device and converts positions directly contacting the person's hand or object into electrical signals. Accordingly, the instruction selected at the contact position is received as an input signal. As the touch screen panel can replace a separate input device that is operated by being connected with the image display device, e.g., a keyboard and a mouse, the use field of the touch screen panel is being expanded gradually.

The touch screen panel may include, e.g., a resistive type, a light sensing type, a capacitive type, etc. For example, the resistive touch screen panel may exhibit a relatively high durability against physical impacts, may maintain uniform performance against changes in its external environment, e.g., change of illumination, and may be suitable for portable terminals due to its thin size and light weight.

The resistive type touch screen panel detects the touch position on a screen in accordance with electricity conducted between an upper substrate and a lower substrate when a touch input is applied. In detail, the resistive type touch screen panel measures the touch pressure at the contact position by calculating a contact area.

### SUMMARY

Embodiments are directed to a resistive type touch screen panel and a display device having the same, which substantially overcome one or more of the problems due to the limitations and disadvantages of the related art.

It is therefore a feature of an embodiment to provide a resistive type touch screen panel that has improved transmittance.

It is another feature of an embodiment to provide a resistive type touch screen panel that has improved detection capabilities of touch pressure and touch coordinates.

It is yet another feature of an embodiment to provide a display device having a touch screen panel with one or more of the above features.

At least one of the above and other features and advantages may be realized by providing a touch screen panel which includes an upper substrate, first contact electrodes on the upper substrate, the first contact electrodes being connected to first detecting lines, a lower substrate, second contact electrodes on the lower substrate, the second contact electrodes being connected to second detecting lines, and a transparent piezoresistive layer between the first contact electrodes and the second contact electrodes, the transparent piezoresistive layer being configured to change resistance at a touch input position to detect touch pressure and touch coordinates. The first contact electrodes may cross the second contact electrodes.

In this configuration, the piezoresistive layer may be made of an insulating material containing conductive particles. Further, the conductive particle may be conductive polymer, or an organic particle coated with carbon nanotube on the surface. In this configuration, the organic particle may be an organic silicon particle. Alternatively, the piezoresistive layer may consist essentially of a conductive polymer.

Further, the first detecting lines may be connected to two opposite ends of the first contact electrodes, and the second detecting lines may be connected to at least one end of the second contact electrodes.

In this configuration, a first detecting line connected to the touch input position via a first contact electrode may be configured to transmit a first voltage, and a second detecting line connected to the touch input position via a second contact electrode may be configured to receive a voltage corresponding to the first voltage, the received voltage at the second detecting line being configured to indicate the touch coordinates.

Further, a plurality of the second contact electrodes and a plurality of second detecting lines connected to the second contact electrodes may be provided, and voltage applied to the second contact electrodes and the second detecting lines connected to second contact electrodes may be detected, with the first voltage applied to the first detecting lines.

Further, a plurality of the first contact electrodes and a plurality of first detecting lines connected to the first contact electrodes may be provided, and the first voltage may be sequentially applied to the first contact electrodes and the first detecting lines.

Further, a first detecting line connected to the touch input position via a first end of a first contact electrode may be configured to transmit a base voltage, a second detecting line connected to the touch input position via a first end of a second contact electrode may be configured to transmit a second voltage, and a second end of the first contact electrode may be configured to receive voltage corresponding to the base voltage to detect the touch pressure.

Further, a base voltage and a third voltage may be applied to the first detecting lines connected to one end and the other end of the first contact electrode, respectively, and a first coordinate may be sensed by detecting the voltage applied to the second detecting line connected to one end of the second contact electrode, and a base voltage and a fourth voltage may be applied to the second detecting lines connected to one end and the other end of the second contact electrode, and a second coordinate may be sensed by detecting the voltage applied to the first detecting line connected to one end of the first contact electrode.

Further, a plurality of the first contact electrode and the first detecting lines connected to the first contact electrode, and a plurality of second contact electrodes and the second detecting lines connected to the second contact electrodes may be provided, and the first contact electrodes and the second contact electrodes may be formed across each other.

In this configuration, the second contact electrodes and the second detecting lines may be formed on the upper substrate of the touch screen panel.

At least one of the above and other features and advantages may also be realized by providing a display device, including a display panel configured to display an image, and a touch screen panel disposed on the display panel and configured to receive a touch input, the touch screen panel having an upper substrate, first contact electrodes on the upper substrate, the first contact electrodes being connected to first detecting lines, a lower substrate, second contact electrodes on the lower substrate, the second contact electrodes being connected to second detecting lines, and a transparent piezoresistive layer between the first contact electrodes and the second contact electrodes, the transparent piezoresistive layer being configured to change resistance at a touch input position to detect touch pressure and touch coordinates.

The lower substrate of the touch screen panel may be integral with the display panel, the lower substrate of the touch screen panel being a top substrate of the display panel.

The second contact electrodes and the second detecting lines may be on the top substrate of the display panel. The piezoresistive layer may include an insulating layer containing conductive particles. The conductive particles may include a conductive polymer. The conductive particles may be organic particles coated with a carbon nanotube.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1 illustrates a schematic, perspective view of a touch screen panel according to an embodiment;

FIG. 2 illustrates a plan view of the touch screen panel shown in FIG. 1;

FIG. 3 illustrates a cross-sectional view of the touch screen panel shown in FIG. 1;

FIGS. 4A and 4B illustrate enlarged views of conductive particles used in a piezoresistive layer according to an embodiment;

FIG. 5 illustrates a cross-sectional view of a touch screen panel according to another embodiment;

FIG. 6A illustrates a circuit diagram of a method of sensing touch coordinates on the touch screen panel shown in FIGS. 1 to 3;

FIG. 6B illustrates a circuit diagram of a method of sensing touch pressure on the touch screen panel shown in FIGS. 1 to 3;

FIG. 7 illustrates a plan view of a touch screen panel according to another embodiment;

FIGS. 8A and 8B illustrate circuit diagrams of a method of sensing touch coordinates on the touch screen panel shown in FIG. 7;

FIG. 8C illustrates a circuit diagram of a method of sensing touch pressure on the touch screen panel shown in FIG. 7; and

FIG. 9 illustrates a cross-sectional view of a display device having a touch screen panel according to an embodiment.

### DETAILED DESCRIPTION

Korean Patent Application No. 10-2010-0030924, filed on April 5, 2010, in the Korean Intellectual Property Office, and entitled: "Touch Screen Panel and Display Device Having the Same" is incorporated by reference herein in its entirety.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer (or element) is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

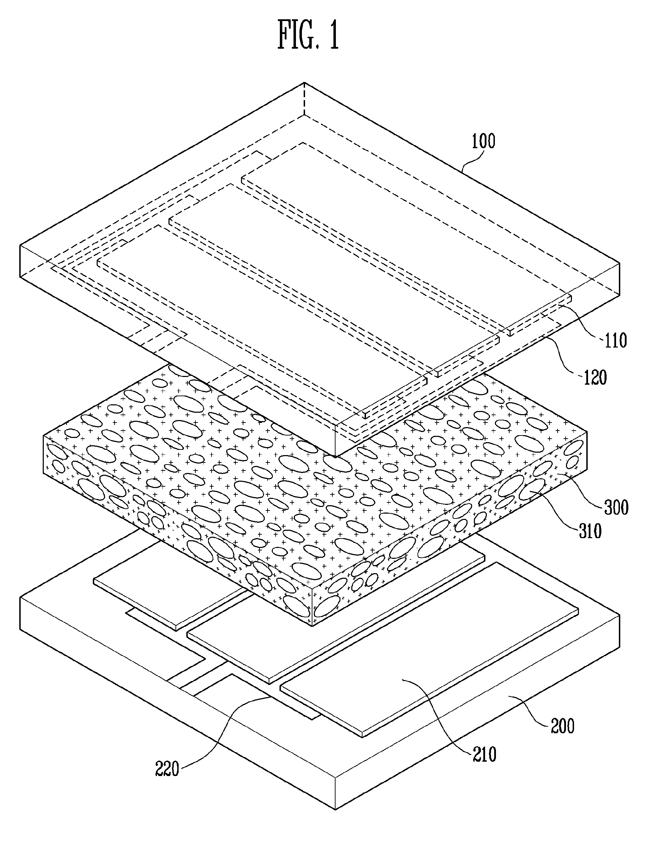

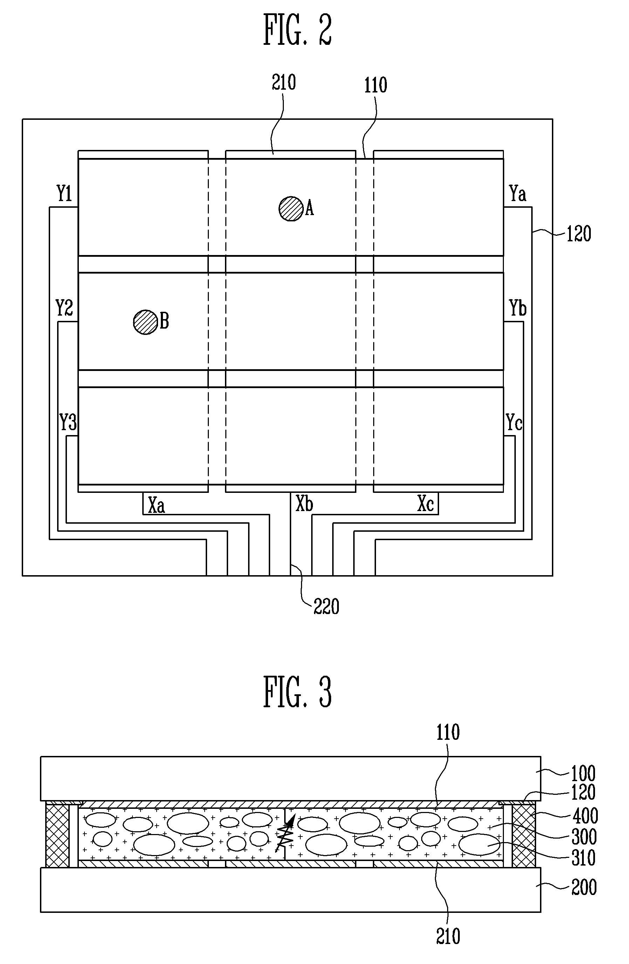

FIG. 1 illustrates a schematic, perspective view of a touch screen panel according to an embodiment. FIGS. 2 and 3 illustrate respective plan and cross-sectional views of the touch screen shown in FIG. 1.

Referring to FIGS. 1 to 3, a touch screen panel according to an embodiment may include an upper substrate 100, first contact electrodes 110 on the upper substrate 100 and connected to first detecting lines 120, a lower substrate 200, second contact electrodes 210 on the lower substrate 200 and connected to second detecting lines 220, and a transparent piezoresistive layer 300. The transparent piezoresistive layer 300 may be made of an insulating material containing conductive particles, and may be disposed between the first contact electrodes 110 and the second contact electrodes 210. The transparent piezoresistive layer 300 may be characterized by sensing touch pressure and touch coordinates, using resistance changes of the piezoresistive layer 300 to the touch input. The upper and lower substrates 100 and 200 may be connected to each other via a sealant 400 (FIG. 3).

In detail, the first contact electrodes 110 may be made of a transparent electrode material, e.g., indium-tin-oxide (ITO), a conductive polymer, or a carbon nanotube (CNT), and may be formed to extend along a first direction on, e.g., directly on, one surface of the upper substrate 100. For example, the first contact electrodes 110 may be implemented by a transparent electrode layer disposed horizontally, i.e., along the first direction, on a lower surface, i.e., a surface facing the lower substrate 200, of the upper substrate 100.

The first detecting lines 120 may be provided to connect the first contact electrodes 110 with an external driving circuit (not shown) and input touch coordinates and touch pressure, and may be connected to both ends of the first contact electrode 110. The first detecting lines 120 (Y lines in FIG. 2) may be formed at the edge portion of the touch screen panel, i.e., a portion without a touch active region, where the first contact electrodes 110 are disposed, and may be formed of any suitable material. For example, the first detecting lines 120 may be made of a low-resistance material, e.g., Mo, Ag, Ti, Cu, Al, and Mo/Al/Mo, other than the transparent electrode material.

The second contact electrodes 210 may be formed on one surface of the lower substrate 200 to face the first contact electrodes 110. The second contact electrodes 210 may extend along a second direction to cross the first contact electrodes 110, and may be made of a transparent electrode material, e.g., of a same material as the first contact electrodes 110. For example, the second contact electrodes 210 may be implemented by a transparent electrode layer disposed on an upper surface of the lower substrate 200 to face the first contact electrode 110 and to extend perpendicularly with respect to the first contact electrodes 110.

The second detecting lines 220 may be provided to connect the second contact electrode 210 to the external driving circuit (not shown), and may be connected to at least one end of the second contact electrodes 210. The second detecting lines 220 (X lines in FIG. 2) may also be formed at the edge portion of the touch screen without the touch active region where the second contact electrodes 210 are disposed, and may be formed of any suitable material. For example, the second detecting lines 220 may be made of a low-resistance material, other than the transparent electrode material.

The piezoresistive layer 300 may be disposed between the first contact electrodes 110 and the second contact electrodes 210, and may be made of a transparent insulating material containing the conductive particles 310. For example, as illustrated in FIG. 3, the piezoresistive layer 300 may be in direct contact with the first and second contact electrodes 110 and 210, and may fill, e.g., completely fill, a space between facing surfaces of the first and second contacts electrodes 110 and 210. The refractive index of the piezoresistive layer 300 may be set close to the refractive indices of the upper and lower substrates 100 and 200, e.g., the refractive index of the piezoresistive layer 300 may be a value between the refractive indices of air and the first and second substrate 100 and 200. Accordingly, the touch screen panel according to this embodiment may provide improved transmittance, e.g., as compared to a conventional resistive type touch screen panel having an air gap between the first and second contact electrodes instead of the piezoresistive layer 300.

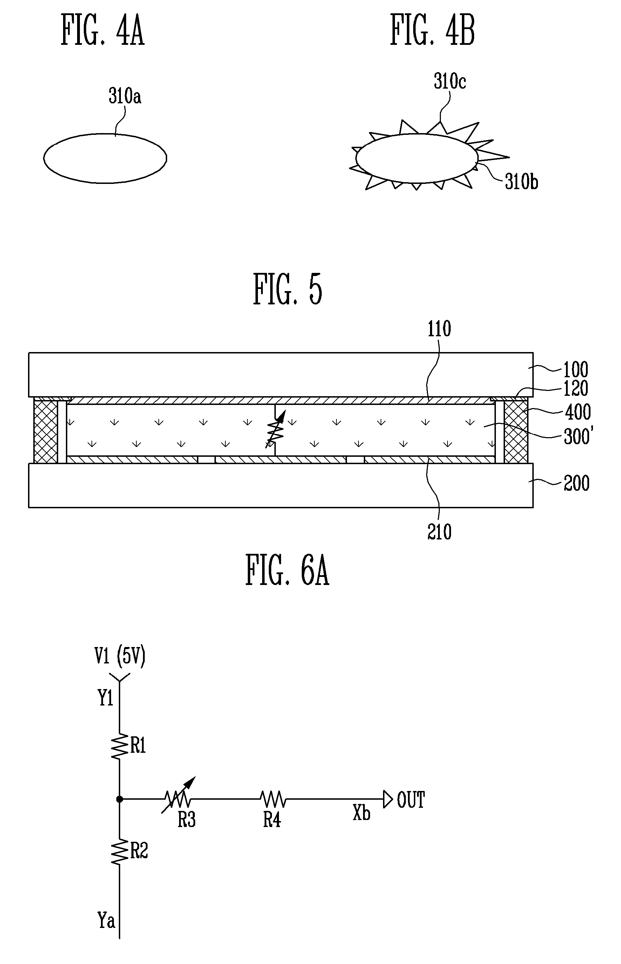

As discussed previously, the piezoresistive layer 300 may be formed of any suitable insulating material containing the conductive particles 310. The conductive particles 310 may be made of a transparent material to ensure transparency of the piezoresistive layer 300. For example, as illustrated in FIG. 4A, the conductive particles 310 may be made of a conductive polymer 310a, e.g., polyvinylidene fluoride (PVDF). In another example, as illustrated in FIG. 4B, the conductive particles 310 may be organic particles 310b, e.g., organic silicon particles, coated with CNT 310c on the surface. It is noted, however, that the conductive polymer 310a and organic particles 310b are merely examples of the conductive particles 310, and the conductive particles 310 for implementing the piezoresistive layer 300 are not limited thereto, i.e., the conductive particle 310 may be made of various materials.

According to another example embodiment illustrated in FIG. 5, the touch screen panel may include a piezoresistive layer 300' made without the conductive particles 310. For example, the piezoresistive layer 300' may be made of a substantially same material throughout, e.g., the piezoresistive layer 300' may consist essentially of a single material including a single compound. That is, the piezoresistive layer 300' may be made of a material in which a resistance value changes in accordance with applied external pressure, e.g., PVDF, and which exhibits improved transmittance. Therefore, the piezoresistive layer 300' may sense touch input while the resistance value changes with respect to the touch input.

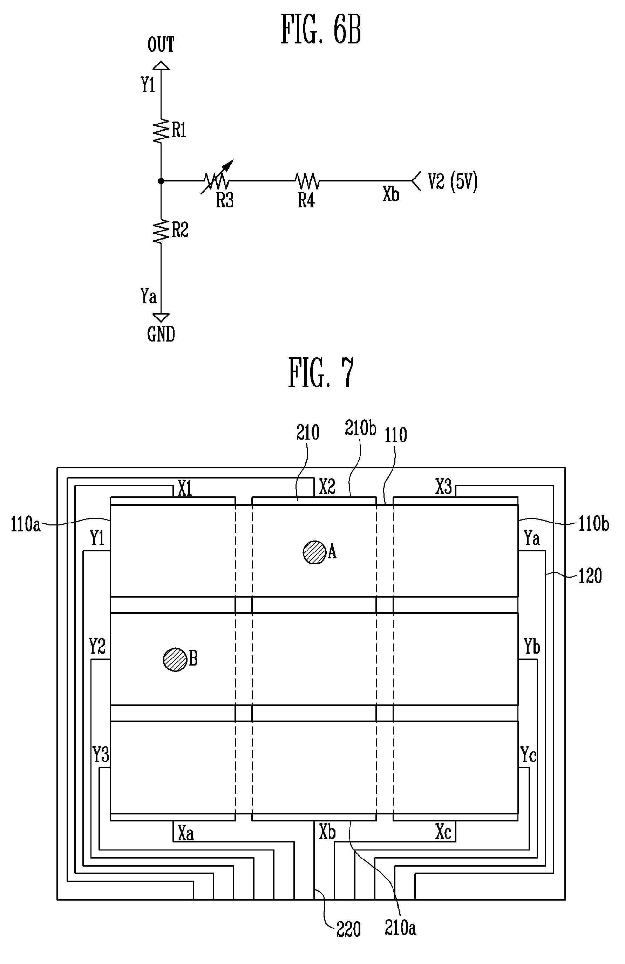

Operation of the piezoresistive layer 300 is as follows. The piezoresistive layer 300 functions as an insulator that prevents electricity from being conducted between the upper substrate 100 equipped with the first contact electrodes 110 and the lower substrate 200 equipped with the second contact electrodes 210, while maintaining a resistance value of about tens to hundreds of MΩwhen a touch input is not provided. When a touch input is provided, however, the piezoresistive layer 300 may conduct electricity between the upper substrate 100 with the first contact electrodes 110 and the lower substrate 200 with the second contact electrodes 210 via the conductive particles 310. That is, the conductive particles 310 may establish a conductive path between the upper and lower substrates 100 and 200 when pressurized and condensed in a region of a touch input, so the resistance value at the region of the touch input may decrease to a value between several to hundreds Ω in order to conduct electricity between the substrates. It is noted that the basic principle of sensing the touch coordinates and the touch input by using the piezoresistive layer 300' are the same as those of the piezoresistive layer 300 described previously with reference to FIGS. 1 to 4B, e.g., the resistance value may be reduced at the contact point of the piezoresistive layer 300' due to the material of the piezoresistive layer 300'. Therefore, in the touch screen panel according to this embodiment, it may be possible to sense the touch coordinates where a touch input is applied, and the touch pressure, as will be described in more detail below with reference to FIGS. 6A and 6B.

It is noted that in the touch screen panel according to this embodiment, one or more first contact electrodes 110 and second contact electrodes 210 are provided, respectively. When only one first contact electrode 110 and one second contact electrode 210 are provided, it may be determined only whether there is a touch in the touch active region. However, when one or more of each of the first contact electrodes 110 and second contact electrodes 210 are provided, it may be possible to find the position where a touch input is provided in the touch active region.

For example, when a plurality of the second contact electrodes 210 and a plurality of the second detecting lines 220 connected to the second contact electrodes 210 are provided, a first predetermined voltage may be applied to the first detecting line 120, so touch coordinates, e.g., X-coordinates, may be sensed by sequentially detecting the voltage applied to the second contact electrodes 210 through the second detecting lines 220. Similarly, when a plurality of the first contact electrodes 110 and a plurality of the first detecting lines 120 connected to the first contact electrodes 110 are provided, the first predetermined voltage may be sequentially applied to the first contact electrodes 110 through the first detecting lines 120 in a scanning way, so touch coordinates, e.g., Y-coordinate, may be sensed by detecting the voltage applied to the second contact electrode 210 through the second detecting lines 220. Therefore, in order to detect an accurate position of the touch input, i.e., to detect accurate touch coordinates, it may be preferable to use a plurality of the first contact electrodes 110 and the first detecting lines 120 connected to the first contact electrodes 110, and a plurality of the second contact electrodes 210 and the second detecting lines 220 connected to the second contact electrodes 210. In this configuration, it may be possible to sense the touch coordinates by sequentially applying the first predetermined voltage to the first contact electrodes 110 in the scanning way and detecting the voltage applied to the second contact electrodes 210, while the first predetermined voltage is applied to the first contact electrodes 110.

According to the touch screen panel of this embodiment as described above, it may be possible to improve the transmittance and detection of touch pressure by disposing the piezoresistive layer 300, e.g., instead of an air-gap, between the upper substrate 100 with the first contact electrodes 110 and the lower substrate 200 with the second contact electrodes 210. Further, since the resistance value of the piezoresistive layer 300 changes in accordance with the touch pressure, it may be possible to sense touch pressure by calculating the resistance value of the piezoresistive layer 300.

Methods of sensing touch coordinates and touch pressure will be described hereinafter. FIG. 6A illustrates a circuit diagram of a method of sensing touch coordinates in the touch screen panel shown in FIGS. 1 to 3, and FIG. 6B illustrates a circuit diagram of a method of sensing touch pressure in the touch screen panel shown in FIGS. 1 to 3. For convenience, a method of sensing touch coordinates and pressure at point A of FIG. 2 will be explained with reference to FIGS. 6A and 6B.

Referring to FIGS. 2 and 6A, a first predetermined voltage V1, e.g., about 5 V, may be applied to a first detecting line Y1 of the first detecting lines 120. As illustrated in FIG. 2, the first detecting line Y1may be connected to one end of a first contact electrode 110 that overlaps point A. Next, the first coordinate, e.g., the X-coordinate, of point A may be determined by detecting simultaneously or sequentially voltages at the second detecting lines Xa, Xb, and Xc of the second detecting lines 220 connected to the second contact electrode 210.

In detail, when the first predetermined voltage V1is applied to the first detecting line Y1, while simultaneously or sequentially detecting voltage at the second detecting lines Xa, Xb, and Xc, electricity is conducted only through the second detecting line Xb connected to the second contact electrode 210 at point A. In other words, as the resistance value of the piezoresistive layer 300 is reduced by the touch input at point A, electricity is conducted between the second contact electrode 210 and the first contact electrode 110 only at point A. Therefore, voltage corresponding to the first predetermined voltage V 1 may be detected only at a second detecting line that is connected to point A, i.e., the second detecting line Xb, and since electricity through the second detecting lines Xa and Xc is not conducted, voltage corresponding to the first voltage V1 is not detected therethrough. Therefore, it may be possible to detect the first coordinate, i.e., the X-coordinate, of point A, i.e., the X-coordinate of the touch input position, in accordance with the second detecting line which conducts electricity.

Further, when the first predetermined voltage V1 is applied to the first detecting lines Y2 and Y3, i.e., lines not connected to the first contact electrode 110 at point A, voltage corresponding to the first predetermined voltage V is not detected through the second detecting lines Xa, Xb, and Xc. Therefore, it may also be possible to detect the second coordinate, i.e., the Y-coordinate, of point A, i.e., on the second axis with respect to the touch input, by detecting the voltage applied to the second detecting lines Xa, Xb, and Xc connected to the second contact electrodes 210, while sequentially applying the first voltage V1to the first contact electrodes 110.

In this case, referring to FIG. 6A, when a touch input is applied to point A, voltage corresponding to the first predetermined voltage V 1 is detected by detecting the voltage at the second detecting line Xb, as the second detecting line Xb is electrically connected to the second contact electrode 210 and the first contact electrode 110 at point A. Therefore, detection of voltage corresponding to the first predetermined voltage V1, i.e., voltage applied to the first detecting line Y1 connected to one end of the first contact electrode 110 at point A, at the second detecting line Xb facilitates detection of the touch coordinates of point A. That is, with the first predetermined voltage V1 applied to the first detecting line Y1 connected to one end of the first contact electrode 110, the voltage at the second detecting line Xb connected to one end of the second contact electrode 210 is detected, thereby sensing the touch coordinates. It is noted that the first detecting line Ya connected to the other end of the first contact electrode 110 is not used in the process of detecting the touch coordinates and may be set to a floating state.

Referring further to FIG. 6A, reference numeral "R1" equivalently represents the resistance between the first detecting line Y1 connected to one end of the first contact electrode 110 and point A of the first contact electrode 110, and reference numeral "R2" equivalently represents the resistance between point A of the first contact electrode 110 and the first detecting line Ya connected to the other end of the first contact electrode 110. Further, reference numeral "R3" equivalently represents the resistance of the piezoresistive layer 300 which changes in accordance with the touch pressure at point A, and reference numeral "R4" equivalently represents the resistance between point A of the second contact electrode 210 and the second detecting line Xb connected to one end of the second contact electrode 210.

Therefore, the resistance values of R1, R2 and R4 are constants and can be determined in advance of the process of manufacturing the touch screen panel. While the resistance value of R3 is variable and changes in accordance with the touch pressure, the resistance value of R3 may be calculated on the basis of the characteristics of the piezoresistive layer 300, e.g., based on an experimental process or installment process. Therefore, an estimated value of the voltage of the second detecting line Xb, i.e., voltage corresponding to the first predetermined voltage V1, may be calculated and compared to the measured voltage when the touch input is provided. Accordingly, it may be possible to sense the touch pressure by calculating the resistance value of R3.

Hereinafter, a method of sensing touch pressure will be described with reference to FIGS. 2 and 6B. After the touch coordinates are detected, as discussed previously with reference to FIGS. 2 and 6A, it may be possible to sense the touch pressure by applying a second predetermined voltage V2, e.g., 5 V, to the second detecting line Xb connected to one end of the second contact electrode 210 at the touch position, and applying a base voltage, e.g., a ground voltage, to the first detecting line Ya connected to one end of the first contact electrode 110 at the touch position. As such, it may be possible to detect the voltage applied to the first detecting line Y1 connected to the other end of the first contact electrode 110.

In detail, the resistance values of R1, R2, and R4 are known, i.e., values found in advance, and voltages of the first detecting line Ya connected to the first contact electrode 110 and of the second detecting line Xb connected to the second contact electrode 210 are known. Therefore, the resistance value of R3 may be calculated by detecting the voltage applied to the first detecting line Y1 connected to the other end of the first contact electrode 110.

Further, it may be possible to find the touch pressure by applying the calculated resistance value of R3 to pre-measured data with respect to the resistance value, i.e., the resistance value of R3, of the piezoresistive layer 300 according to the touch pressure. In addition, it may be possible to sense the touch pressure and touch coordinates in the same method by changing the detecting point and applying point of voltage even if a touch input is applied to point B (FIG. 2) or multiple points, i.e., find whether there is a multi-touch.

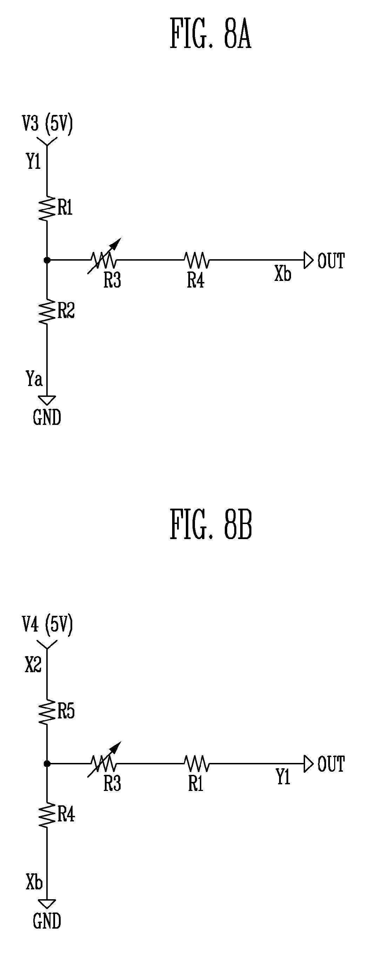

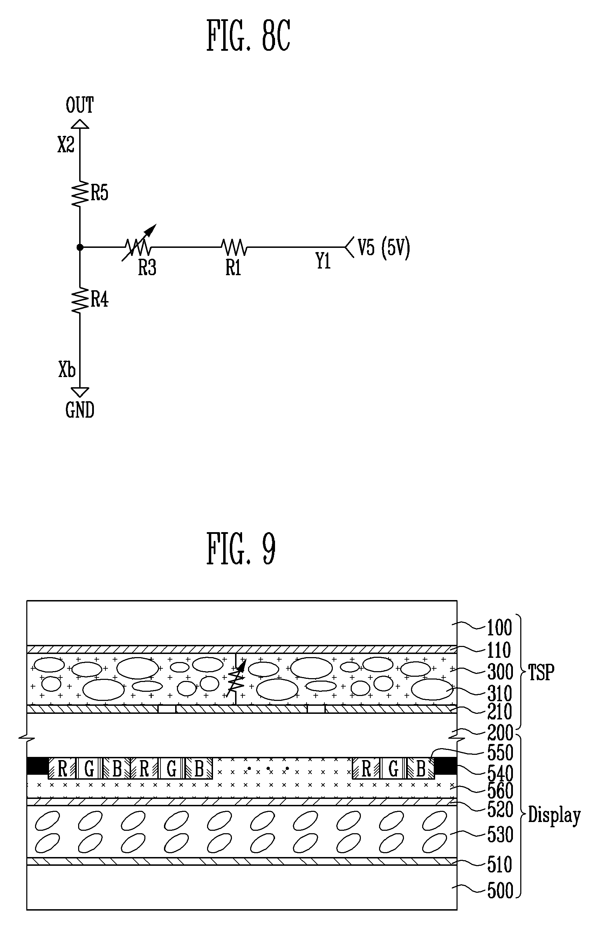

FIG. 7 illustrates a plan view of a touch screen panel according to another embodiment. FIGS. 8A and 8B illustrate circuit diagrams of a method of sensing touch coordinates in the touch screen panel shown in FIG. 7, and FIG. 8C illustrates a circuit diagram of a method of sensing touch pressure in the touch screen panel shown in FIG. 7. For convenience, detailed description of same or similar components described previously with reference to FIGS. 1 to 6B will be omitted with reference to FIGS. 7 to 8C.

Referring to FIG. 7, in a touch screen panel according to this embodiment, the second detecting lines 220 may be connected to first and second ends 210a and 210b of the second contact electrodes 210. Therefore, according to this embodiment, it may be possible to prevent reduction of sensitivity due to signal interference and to accurately sense touch coordinates, even if a larger number of contact electrodes 110 and 210 and detecting lines X and Y are formed in the touch active region in order to improve accuracy.

In detail, it may be possible to detect the first coordinate (X-coordinate) and the second coordinate (Y-coordinate) in different processes. For example, when a touch input is applied to point A, it may be possible to detect the first coordinate (X-coordinate) by applying a base voltage and a third voltage V3 to the first detecting lines Ya and Y1 connected to first and second ends 1 10a and 1 10b of the first contact electrode 110 at point A, respectively, and detecting the voltage at the second detecting line Xb or X2 connected to respective first and second ends 210a and 210b of the second contact electrode 210 at point A (FIGS. 7 and 8A). Further, it may be possible to detect the second coordinate (Y-coordinate) by applying a base voltage and a fourth voltage V4 to the second detecting lines Xb and X2 connected to the first and second ends 210a and 210b of the second contact electrode 210 at point A, respectively, and detecting the voltage at the first detecting line Y1or Ya connected to respective first or second ends 110a, 110b of the first contact electrode 110 at point A (FIGS. 7 and 8B).

In further detail, the circuit illustrated in FIG. 8A is configured as an example in order to sense the first coordinate (X-coordinate), and the circuit illustrated in FIG. 8B is configured as an example in order to sense the second coordinate (Y-coordinate). It is noted that "R5" in FIG. 8B equivalently represents the resistance between point A of the second contact electrode 210 and the second detecting line X2 connected to the second end 210b of the second contact electrode 210, i.e., an end applied with the fourth voltage V4.

Referring to FIGS. 8A and 8B, it may be possible to more accurately sense the touch coordinates by preventing reduction of sensitivity due to signal interference, by applying a predetermined voltage to both ends of the first contact electrodes 110 and the second contact electrodes 210 through the first detecting lines Ya and Y1 connected to one and the other end of the first contact electrodes 110 and the second detecting lines Xb and X2 connected to one end and the other end of the second contact electrodes 210, respectively, when sensing the first coordinate (X-coordinate) and the second coordinate (Y-coordinate). In this process, the basic principle for sensing the touch coordinates is the same as in the first embodiment described with reference to FIG. 6A, such that the detailed description is not provided.

The circuit in FIG. 8C is configured to detect touch pressure in the touch screen panel according to this embodiment. The basic principle for sensing the touch pressure is the same as in the circuit described with reference to FIG. 6B, with the exception of applying point voltage, e.g., fifth voltage V5 of 5 V, and detecting the point of voltage. Therefore, a detailed description is not provided.

It is noted that the touch screen panel according to example embodiments, i.e., as described previously with reference to FIGS. 1 to 8C, may be formed on an individual substrate and attached to an upper surface of a display device, or may be formed integrally with a display panel of a display device. In particular, by setting a lower substrate of a touch screen panel as the upper substrate of a display pane, integrally with the display panel of a display device, it may be possible to remove an air-gap between the touch screen panel and the display panel, such that it may be possible to improve transmittance and reduce the thickness of a display device equipped with the touch screen panel.

For example, as illustrated in FIG. 9, the lower substrate 200 of the touch screen panel may be set as an upper substrate of a display panel. In this configuration, the second contact electrodes 210 and the second detecting lines connected to the second contact electrodes 210 may be formed on the upper substrate 200 of the display panel. Alternatively, a display panel disposed at the lower portion of the touch screen panel may be implemented by various types of display panels for displaying images, e.g., a liquid crystal display panel as illustrated in FIG. 9 or an organic light emitting display panel.

Referring to FIG. 9, reference numeral "500" indicates a lower substrate of the liquid crystal display panel, reference numerals "510" and "520" indicate a pixel electrode and a common electrode, respectively, reference numeral "530" indicates a liquid crystal layer, reference numeral "540" indicates a black matrix, reference numeral "550" indicates a color filter, and reference numeral "560" indicates an overcoating layer. However, as a configuration of a liquid crystal display panel is known in the art, a detailed description thereof is not provided.

According to example embodiments, a resistive touch screen panel may include a transparent piezoresistive layer, e.g., instead of an air-gap, between an upper substrate with first contact electrodes and a lower substrate with second contact electrodes. As such, the resistive touch screen panel may exhibit improved transmittance and enhanced detection of touch pressure. In contrast, when a conventional resistive touch screen panel includes an air-gap between patterned transparent electrodes of the upper and lower substrates, transmittance may be decreased by the air-gap. Further, it may be difficult to measure the touch pressure when a stylus pen having uniform contact pressure is used.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the spirit of the present invention as set forth in the following claims.

## Claims

1. A touch screen panel, comprising:
an upper substrate (100);
first contact electrodes (110) on the upper substrate, the first contact electrodes being connected to first detecting lines (120);
a lower substrate (200);
second contact electrodes (210) on the lower substrate, the second contact electrodes being connected to second detecting lines (220); and
a transparent piezoresistive layer (300, 300') between the first contact electrodes and the second contact electrodes, the transparent piezoresistive layer being configured to change resistance at a touch input position to detect touch pressure and touch coordinates.

2. The touch screen panel as claimed in claim 1, wherein the piezoresistive layer (300) includes an insulating material and conductive particles (310).

3. The touch screen panel as claimed in claim 2, wherein the conductive particles (310) include a conductive polymer (310a).

4. The touch screen panel as claimed in claim 2, wherein the conductive particles (310) are organic particles (310b), in particular organic silicon particles, coated with a carbon nanotube (310c).

5. The touch screen panel as claimed in claim 1, wherein the piezoresistive layer (300') consists essentially of a conductive polymer.

6. The touch screen panel as claimed in one of the preceding claims, wherein the first detecting lines (120) are connected to two opposite ends of the first contact electrodes (110), and the second detecting lines (220) are connected to at least one end of the second contact electrodes (210).

7. The touch screen panel as claimed in claim 6, wherein:
a first detecting line (120) connected to the touch input position via a first contact electrode is configured to transmit a first voltage (V1), and
a second detecting line (220) connected to the touch input position via a second contact electrode (210) is configured to receive a voltage corresponding to the first voltage (V1), the received voltage at the second detecting line being configured to indicate the touch coordinates.

8. The touch screen panel as claimed in claim 7, wherein a plurality of the second contact electrodes (210) and a plurality of the second detecting lines (220) connected to the second contact electrodes are provided, and a voltage applied to the second contact electrodes and the second detecting lines connected to the second contact electrodes is detected, with the first voltage (V1) applied to the first detecting lines.

9. The touch screen panel as claimed in claim 7, wherein a plurality of the first contact electrodes (110) and a plurality of the first detecting lines (120) connected to the first contact electrodes are provided, and the first voltage (V1) is sequentially applied to the first contact electrodes and the first detecting lines.

10. The touch screen panel as claimed in claim 6, wherein:
a first detecting line (120) connected to the touch input position via a first end of a first contact electrode (110) is configured to transmit a base voltage,
a second detecting line (220) connected to the touch input position via a first end of a second contact electrode (210) is configured to transmit a second voltage, and
a second end of the first contact electrode being configured to receive a voltage corresponding to the base voltage to detect the touch pressure.

11. The touch screen as claimed in claim 6, wherein the second detecting lines (220) are connected to two opposite ends of the second contact electrodes (210).

12. The touch screen panel as claimed in claim 11, wherein:
a base voltage and a third voltage are applied to the first detecting lines (120) connected to one end and the other end of the first contact electrode (110), respectively,
a first coordinate is sensed by detecting the voltage applied to the second detecting line (220) connected to one end of the second contact electrode (210),
a base voltage and a fourth voltage are applied to the second detecting lines connected to one end and the other end of the second contact electrode, and
a second coordinate is sensed by detecting the voltage applied to the first detecting line connected to one end of the first contact electrode.

13. A display device, comprising:
a display panel configured to display an image; and
a touch screen panel as claimed in one of the preceding claims disposed on the display panel and configured to receive a touch input.

14. The display device as claimed in claim 13, wherein the lower substrate of the touch screen panel is integral with the display panel, the lower substrate of the touch screen panel being a top substrate of the display panel.

15. The display device as claimed in claim 13 or 14, wherein the second contact electrodes (210) and the second detecting lines (220) are on the top substrate of the display panel.
